# EUROPEAN PATENT SPECIFICATION

(11) **EP 2 699 998 B1**
(45) Date of publication and mention of the grant of the patent: **05.09.2018**
(21) Application number: 12773750.0
(22) Date of filing: 20.04.2012
(51) Int. Cl.: G06F 3/0482, G06F 3/0484, G06F 3/0488

(54) **COMPACT CONTROL MENU FOR TOUCH-ENABLED COMMAND EXECUTION**
KOMPAKTES STEUERUNGSMENÜ FÜR BERÜHRUNGSAKTIVIERTE BEFEHLSAUSFÜHRUNG
MENU DE COMMANDE COMPACT POUR UNE EXÉCUTION DE COMMANDE TACTILE

(30) Priority: 20.04.2011 US 201113090438
(43) Date of publication of application: 26.02.2014
(73) Proprietor: Microsoft Technology Licensing, LLC, Redmond, WA 98052 (US)
(72) Inventor: RADAKOVITZ, Samuel, Redmond, Washington 98052-6399 (US); COVINGTON, Clinton, Redmond, Washington 98052-6399 (US)
(74) Representative: Grünecker Patent- und Rechtsanwälte PartG mbB
(86) International application number: PCT/US2012/034543
(87) International publication number: WO 2012/145691

(56) References cited:
- CN-A- 101 872 284
- GB-A- 2 317 092
- US-A1- 2008 048 973
- US-A1- 2010 031 198
- US-A1- 2010 070 910
- US-A1- 2010 180 233
- US-A1- 2010 235 726
- US-A1- 2010 235 785
- US-A1- 2010 275 150

## Description

### BACKGROUND

Traditional computing devices such as computers, message boards, electronic billboards, and monitoring devices are controlled directly over a user interface using input hardware. Typically, they are directly controlled using input devices such as a mouse, remote control, keyboard, stylus, touch screen, or the like for controlling the device. Touch-enabled devices, however, are typically controlled over a touch interface by the detection and analysis of touch input by a user. In touch interfaces, input devices such as a keyboard, stylus or a mouse are not fully integrated with the touch-enabled device and commands for controlling operations on software, applications or documents in the device are not easily accessible. For example, keyboards have multiple keys for navigating and selecting options, and a typical mouse can be used to select options, scroll, and display and navigate menus utilizing a right-click function. Since these navigating and selecting tools are not available in touch interfaces, editing a document or making changes in a program may be limited and may be much slower than in traditional computing devices with integrated input hardware.

Some touch devices integrate menus for navigating and executing commands on a touch-enabled device at the top edge or bottom edges of the interface screen. The menus may provide more accessible options for editing and navigating documents, however the menus take up valuable screen space on a touch screen interface and may obstruct the view of the document or provide a smaller working view of a document. Generally, it is desirable to maximize the working view of a document or application by hiding menus and commands until the user needs them.

US 2010/031198 A1 discloses in one embodiment that recognized entities are identified or selected from displayed data. Each recognized entity has a type. Every type of recognized entity has associated action options that populate a node menu for that type. The node menu options are selectable to rapidly execute the associated action. Selections of node menu options can be achieved through a variety of mechanisms used in computers and mobile devices. Mechanisms can include touchscreen interfaces and touchpads. Once an entity is selected, a node menu is displayed. The node menu contains options for actions that a user may want to take with respect to the selected entity. In one embodiment, the node menu contains up to six action options. If more than six action options are available for display, the sixth option may be an option to view the remainder of the options. In this case, the sixth option may be labeled "More" or another appropriate indicator that more action options are available if the option is selected. If the user selects the sixth option, the remaining action options may appear in simple list displayed on the display of the device or in another node menu that branches out from the sixth option, for example. US 2010/235726 A1 discloses a device that detects input by finger gestures. In response to the finger gestures, the device selects content, visually distinguishes the selected content, and/or updates the selected content based on detected input. In some embodiments, the device displays a command display area that includes one or more command icons; detects activation of a command icon in the command display area; and, in response to detecting activation of the command icon in the command display area, performs a corresponding action with respect to the selected content. Exemplary actions include cutting, copying, and pasting content. In some embodiments, the command display area includes an icon for displaying additional command options. In response to detecting activation of the icon for displaying additional command options, the device displays additional command icons. GB 2 317 092 A discloses that a user performs a manual selection or a gesture selection of a screen object on a screen of an electronic device using a pointing device. After a manual selection, such as a single tap, the electronic device automatically presents a temporary directional palette having palette buttons that explicitly state functions of the electronic device. Each palette button has a unique compass direction relative to the original tap area. By making a second tap on a desired palette button, a novice user learns available functions of the electronic device and their corresponding directional gestures. Alternately, the user may perform a gesture selection of both a screen object and a function, such as making a double tap or drawing a line in the appropriate direction, before the directional palette appears on the screen.

It is the object of the present invention to provide an improved control interface for touch-enabled command execution.

This object is achieved by the subject-matter of the independent claims.

Embodiments are defined by the dependent claims.

### SUMMARY

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

The invention is directed to providing a compact control menu over an interactive touch interface where a user may interact with a touch-enabled device to execute commands. According to aspects of the invention, a compact control menu is provided after a user makes a touch selection in a document to aid in the user's ability to execute common control commands quickly and in the context of the selection. The compact control menu initially appears in a collapsed state and allows the user to swipe in a particular direction for executing a command. The compact control menu is expanded upon a trigger to expand initiated by a particular user touch motion on the touch interface, the particular touch motion being a tap motion on the collapsed state control menu. The user may execute a command from the expanded command menu and after command execution, the compact control menu may disappear until a further user selection within a document. In some embodiments, the compact control menu in the collapsed state displays a limited number of commands and the expanded compact control menu displays more command options.

These and other features and advantages will be apparent from a reading of the following detailed description and a review of the associated drawings. It is to be understood that both the foregoing general description and the following detailed description are explanatory and do not restrict aspects as claimed.

### BRIEF DESCRIPTION OF THE DRAWINGS

FIG. 1 illustrates an example of a compact control menu in a touch user interface environment;
FIG. 2 illustrates an example of an expanded compact control menu in a touch user interface environment;
FIG. 3 illustrates an example of an expanded compact control menu in a touch user interface environment;
FIG. 4 illustrates example configurations of a compact control menu in a collapsed state and an expanded state, according to embodiments.
FIG. 5 is a networked environment, where a system according to embodiments may be implemented;
FIG. 6 is a block diagram of an example computing operating environment, where embodiments may be implemented; and
FIG. 7 illustrates a logic flow diagram for a process of providing a compact control menu over a touch interface for executing commands according to embodiments.

### DETAILED DESCRIPTION

As briefly described above, a compact control menu may be presented to a user over an interactive touch interface in order for a user to execute commands on a touch-enabled device. When a user makes a touch selection in a document, the compact control menu may be provided to aid in the user's ability to execute common control commands quickly and in the context of the selection. The compact control menu may initially appear in a collapsed state displaying a limited number of commands, allowing the user to swipe in a direction for executing a command; and the compact control menu may be expanded to display more command options upon a trigger to expand initiated by a particular user touch motion on the touch interface. After a command execution, the compact control menu may disappear until a further user selection within a document.

In the following detailed description, references are made to the accompanying drawings that form a part hereof, and in which are shown by way of illustrations specific embodiments or examples. These aspects may be combined, other aspects may be utilized, and structural changes may be made without departing from the scope of the present disclosure. The following detailed description is therefore not to be taken in a limiting sense, and the scope of the present invention is defined by the appended claims.

While the embodiments will be described in the general context of program modules that execute in conjunction with an application program that runs on an operating system on a computing device, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that embodiments may be practiced with other computer system configurations, including hand-held devices, multiprocessor systems, microprocessor-based or programmable consumer electronics, minicomputers, mainframe computers, and comparable computing devices. Embodiments may also be practiced in distributed computing environments where tasks are performed by remote processing devices that are linked through a communications network. In a distributed computing environment, program modules may be located in both local and remote memory storage devices.

Embodiments may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium can for example be implemented via one or more of a volatile computer memory, a non-volatile memory, a hard drive, a flash drive, a floppy disk, or a compact disk, and comparable media.

Throughout this specification, the term "platform" may be a combination of software and hardware components for providing a compact control menu over an interactive touch interface and detecting user touch input for expanding the control menu and executing commands. Examples of platforms include, but are not limited to, a hosted service executed over a plurality of servers, an application executed on a single computing device, and comparable systems. The term "server" generally refers to a computing device executing one or more software programs typically in a networked environment. However, a server may also be implemented as a virtual server (software programs) executed on one or more computing devices viewed as a server on the network. More detail on these technologies and example operations is provided below.

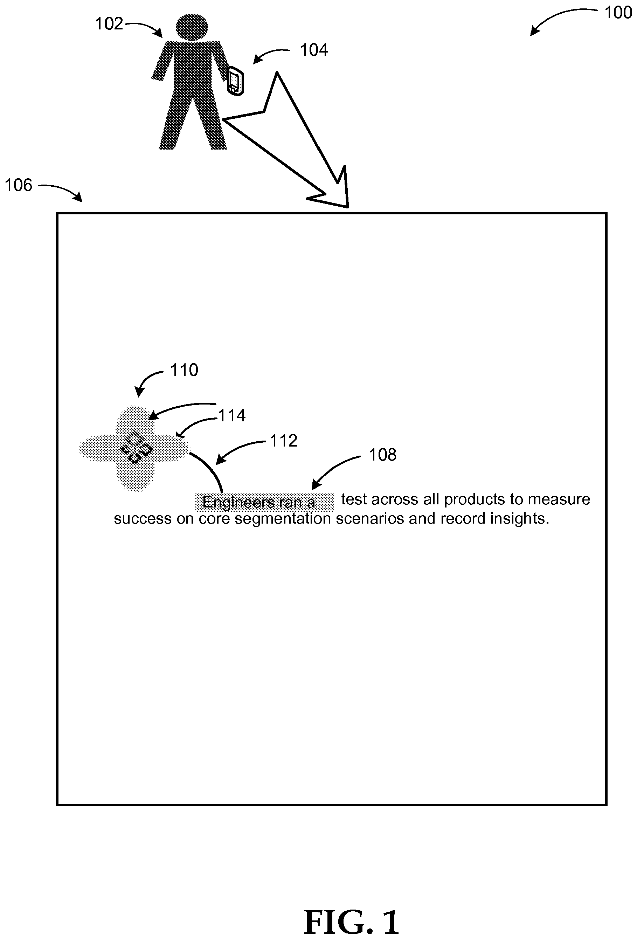

Referring to FIG. 1, diagram 100 illustrates an example of a compact control menu in a touch user interface environment, where embodiments may be implemented. The computing device and user interface environment shown in diagram 100 are for illustration purposes. Embodiments may be implemented in various local, networked, and similar computing environments employing a variety of computing devices and systems. A touch user interface environment may be a smart phone, for example, or any touch-enabled computing device allowing a user to interact with the device through touch.

FIG. 1 illustrates an example embodiment of a configuration of a touch interface, where a user 102 may operate and control an application on a touch-enabled device 104 by executing commands using a compact control menu 110. In an embodiment, a compact control menu 110 may appear over a user interface 106 of a touch-enabled device 104 to allow the user 102 to select and execute commands for controlling applications and editing documents. In a touch interface environment, input devices such as a mouse or keyboard may not be incorporated with the touch-enabled device, such that only touch commands may be utilized for controlling applications and editing documents over the user interface. The compact control menu 110 may be presented to the user 102 over the user interface 106 to enable quick access to commands and without taking up too much space on the user interface or impeding the screen view.

In a system according to embodiments, when a user 102 views a document or application over a user interface, control options are not initially visible on the screen while the user is reading and scrolling through the document. When the user desires to execute a command for editing a portion of the document, the user may select a portion of the document for editing 108 using a touch selection motion, and the compact control menu 110 appears after a user 102 creates a selection in the document. The compact control menu 110 may be anchored 112 to the selected portion 108 for indicating which selection the compact control menu 110 may be associated with. The user may then use a touch motion to execute a command displayed on the compact control menu 110. The selected portion of the document (or user interface) may be a text portion, a graphic portion, a number of cells in a table, a portion of an image, or a combination of any of those.

As demonstrated in FIG. 1, the compact control menu 110 may initially appear in a collapsed state, displaying a limited number of available commands. The compact control menu may be in a shape that indicates the number of available commands for executing. Each defined region of the shape may represent an available command, such that a touch motion in a particular region operates to control the command represented by that region. For example, the compact control menu may be in a shape with four corners, where each corner region represents four distinct commands, such as for example, cut, copy, paste and delete. In further examples, the control menu may be a circle where each quarter of the circle is a separate distinct region, and up, down, left and right are four distinct directions representing four distinct commands; or in another example, the control menu may be a triangle where the top is one direction for one command, the lower right corner is another direction representing another command and the lower left is a third direction representing a third command.

In another embodiment, the number of available commands may be displayed as defined extensions 114 from the compact control menu 110 representing the commands for executing, such as for example a cross, a star, or a flower, where parts of the shape extend from the center as points or extensions 114. In other embodiments, additional or fewer commands may be represented by defined regions of the shape of the compact control menu and the compact control menu 110 may be of any alternative shape which indicates the number of available commands. An extension as used herein may refer to a defined region of a shape, corner, or point extending from the center of a shape wherein the extension serves to represent a direction for an available command.

As demonstrated in FIG. 1, in an example embodiment, the user may use a touch motion to select a command from one of the defined regions or extensions 114 of the compact control menu 110 in the collapsed state. The user may use a swipe motion in the direction of one of the defined regions or extensions 114 for executing the command represented by that region or extension 114. An available command from the compact control menu 110 may be to expand the compact control menu from the collapsed state to an expanded state where more commands are available and the commands are displayed at the defined regions or on the extensions 114.

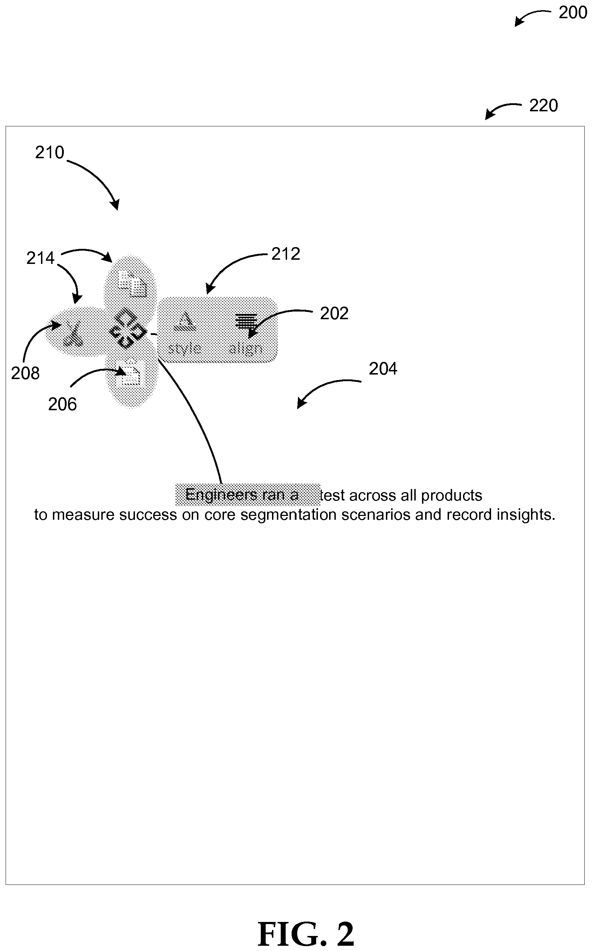

FIG. 2 illustrates an example of an expanded compact control menu in a touch user interface environment. In an example embodiment, the compact control menu may initially be presented in a collapsed state 110, such that a user views a shape with defined regions 114 that indicate the available commands. The user may swipe in the direction of a defined region 114 to select a command from the collapsed state menu, or the collapsed state compact control menu may be expanded to display more available commands. The user may use a tapping motion to trigger the compact control menu 110 to expand from the collapsed state 110 to an expanded state 210 where more commands are available and the commands are displayed at the defined regions 214, as demonstrated in diagram 200.

In an embodiment, one defined region 214 may represent a command for expanding the compact control menu 210 to display more available commands. The user may swipe in the direction of the region for expanding the compact control menu from the collapsed state to the expanded state causing more available commands to be displayed. Alternatively, the user may tap the compact control menu 210 to trigger the menu to expand to display more available commands.

As illustrated in diagram 200, the expanded state compact control menu may display which command is represented by each region of the compact control menu 110. For an example, commands such as copy, cut 208 and paste 206 may be displayed at each defined region 214 of the compact control menu 210. The commands may be displayed on the menu using text 202 or graphics 206, 208, or, in other examples the commands may be represented by symbols, icons, abbreviations, or full text labels in various orientations. In a further example of an expanded state, two or more available commands may be displayed at each region that a user may select 212.

Available commands may be programmed into permanent particular positions at each defined region of the compact control menu so that the user(s) can create a habit of always swiping in a particular direction for execution of a particular command. For example, as shown in diagram 100, the user may always swipe to the left in order to execute a cut 208 operation. When the user remembers where each command is positioned, the user may utilize the compact control menu 110 in its collapsed state without the need to expand the menu into its expanded state 210 in order to quickly execute routine command functions.

In an embodiment, the command positions may be pre-programmed as part of the system, or alternatively, the user(s) may select which commands the user desires to be associated with the defined regions of the compact control menu, the number of commands that should be displayed in the collapsed state menu, and the position of the commands at each region. Additionally, the user may select the type of display of the commands that the user prefers in the expanded state of the compact control menu 210. For example, the user may prefer icons or graphic images to represent a command, or a user may prefer a textual representation. The user may select an abbreviation, or may customize a representation for a command. Additionally the user may choose size, font, and orientation of command displays in the expanded state compact control menu 210 based on the user's custom preferences.

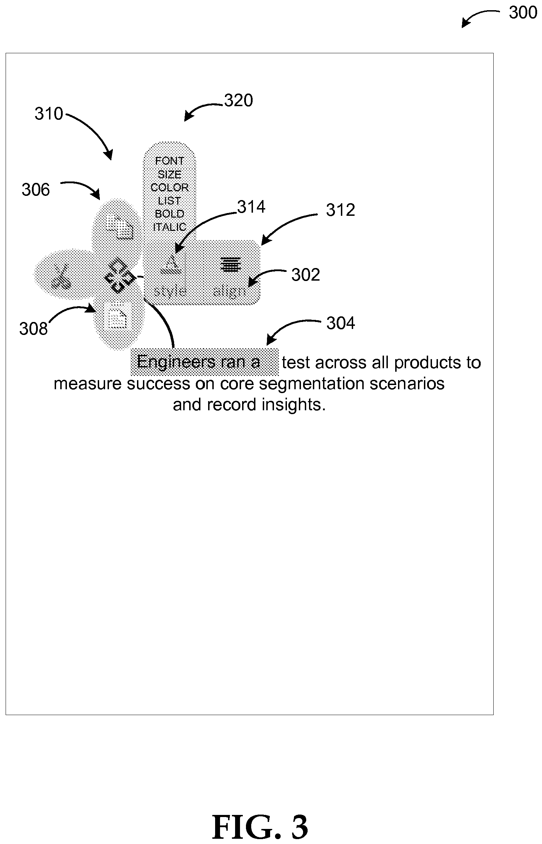

FIG. 3 illustrates an example of an expanded compact control menu in a touch user interface environment. In a further example of an expanded state compact control menu 310, the compact control menu 310 may display two or more available commands at a defined region that a user may select 312 for executing a command. As illustrated in diagram 300, a particular region 312 may display two or more available commands while another region may only display one command 310. In an example embodiment, when multiple commands are associated with a defined region, a swipe motion may not be appropriate for executing a command. A tap motion may be utilized by the user to select one of the available commands at a particular region.

In a further example, an available command may have two or more options associated with the command 314, such that a user may desire to view and select from the available options. For example, as demonstrated in diagram 300, the right extension 312 may display two available commands, a text command 314 and an alignment command 302. A variety of options may be available for executing a command associated with the text command 314, and the compact control menu 310 in the expanded state may be configured to expand further to display a second level control menu 320 with the available options and commands associated with the first level commands 312. In example embodiments, the second level control menu 320 with more available commands may be presented as a popup menu or a dropdown menu or as an extension 320 anchored to the first extension 312. In further examples, more levels of expansion may be provided for presenting available commands and options. The user may execute a command from the second level control menu 320 by tapping the selected option. If the selection is a command to operate, the tapping motion may execute the command, or alternatively, if the selection is a command with more available options, the tapping may operate to expand to present the further options. After execution of a command to edit the selection of the document or application, the compact control menu 310 may disappear from the screen view so that the user may continue to review a document or application on the touch-enabled device 300 without obstruction of the view by the control menu 310. Upon another selection by the user, the compact control menu may appear again for presenting available commands relating to the newly selected portion of the document.

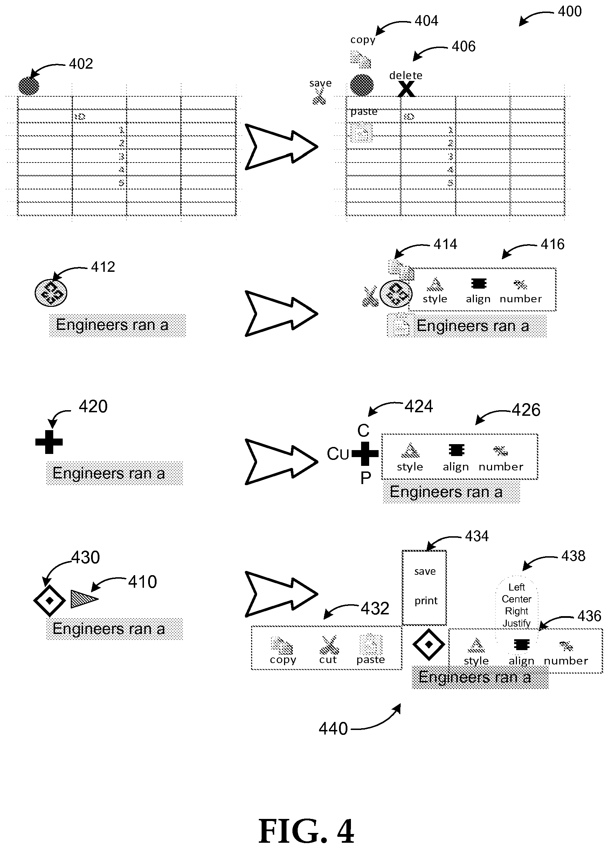

FIG. 4 illustrates example configurations of a compact control menu in a collapsed state and an expanded state, according to embodiments. As illustrated in diagram 400 the compact control menu may be in any configuration or shape that indicates the number of available commands for executing. Each defined region of the shape may represent an available command, such that a touch motion in a particular region operates to control the command represented by that region. For example, the compact control menu may be a circle 402, 412 where each quarter of the circle is a separate distinct region such that a user may swipe up, down, left or right to select the command represented in any of the four distinct regions. Alternatively, the user may tap the circle 402 to expand the control menu to the expanded state where available commands are displayed at each defined region. A region may display one executable command 404, 406 or may display multiple commands that may include further available options 416. In another embodiment, the regions may be more defined with an icon or shape that distinctly points to the defined regions 412. A tap on the menu 412 may cause the menu to expand displaying the available commands.

In another embodiment, the number of available commands may be displayed as defined extensions 420 from the compact control menu representing the commands for executing, such as for example a cross, a star, or a flower, where parts of the shape extend from the center as points or extensions. In another example, the compact control menu may be in a shape with four corners 430, where each corner region represents four distinct commands. Different numbers of commands may be represented by regions of the shape of the compact control menu and the compact control menu may be of any alternative shape which indicates the number of available commands. The commands may be displayed as text 434, icon 414, abbreviation 424, or a combination of representations 404. The display options and positions of the commands in defined regions of the control menu may be predefined by the system, or a user may customize to the user's preferences.

As illustrated in diagram 400, in an embodiment, each defined region may represent one command 404, 406, such that a swipe in a direction executes the command associated with the defined region in that direction. Alternatively each defined region may represent two or more available commands 432, 434, 436. The initial compact control menu may include an additional expansion menu 410 for expanding from the collapsed state to the expanded state control menu 440. The first shape 430 may allow a user to swipe in the direction of any of the defined regions to expand the available commands for that region. For example, if the user swiped in the left direction of menu 430, then the available commands on the left region would be displayed 432. The control menu may also include a second expansion menu 410, that when tapped by a user causes all of the regions of the collapsed state control menu to expand such that all available commands are displayed to the user 440. The user may then select one of the available commands from any of the displayed regions to further expand the control menu, generating a second level control menu 438 displaying more available options for the selected command.

The example systems in FIG. 1 through 4 have been described with specific devices, applications, and interactions. Embodiments are not limited to systems according to these example configurations. A system for providing a compact control menu over an interactive touch interface and detecting user touch input for expanding the control menu and executing commands may be implemented in configurations employing fewer or additional components and performing other tasks. Furthermore, specific protocols and/or interfaces may be implemented in a similar manner using the principles described herein.

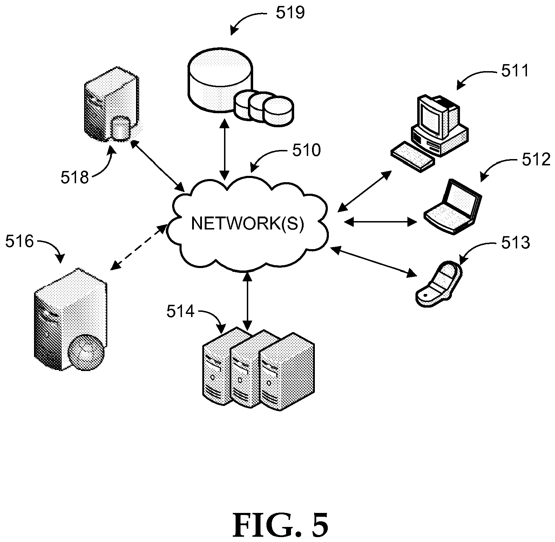

FIG. 5 is an example networked environment, where embodiments may be implemented. A system for providing a compact control menu over an interactive touch interface and detecting user touch input for expanding the control menu and executing commands may be implemented via software executed over one or more servers 515 such as a hosted service. The platform may communicate with client applications on individual computing devices such as a smart phone 513, a laptop computer 512, or desktop computer 511 ('client devices') through network(s) 510.

Client applications executed on any of the client devices 511-513 may facilitate communications via application(s) executed by servers 514, or on individual server 516. An application executed on one of the servers may facilitate the detection of a user touch selection in a document, presenting a compact control menu associated with the selection, and detecting user touch input for expanding the control menu and executing commands. The application may retrieve relevant data from data store(s) 519 directly or through database server 518, and provide requested services (e.g. document editing) to the user(s) through client devices 511-513.

Network(s) 510 may comprise any topology of servers, clients, Internet service providers, and communication media. A system according to embodiments may have a static or dynamic topology. Network(s) 510 may include secure networks such as an enterprise network, an unsecure network such as a wireless open network, or the Internet. Network(s) 510 may also coordinate communication over other networks such as Public Switched Telephone Network (PSTN) or cellular networks. Furthermore, network(s) 510 may include short range wireless networks such as Bluetooth or similar ones. Network(s) 510 provide communication between the nodes described herein. By way of example, and not limitation, network(s) 510 may include wireless media such as acoustic, RF, infrared and other wireless media.

Many other configurations of computing devices, applications, data sources, and data distribution systems may be employed to implement a platform for providing a compact control menu over an interactive touch interface and detecting user touch input for expanding the control menu and executing commands. Furthermore, the networked environments discussed in FIG. 5 are for illustration purposes only. Embodiments are not limited to the example applications, modules, or processes.

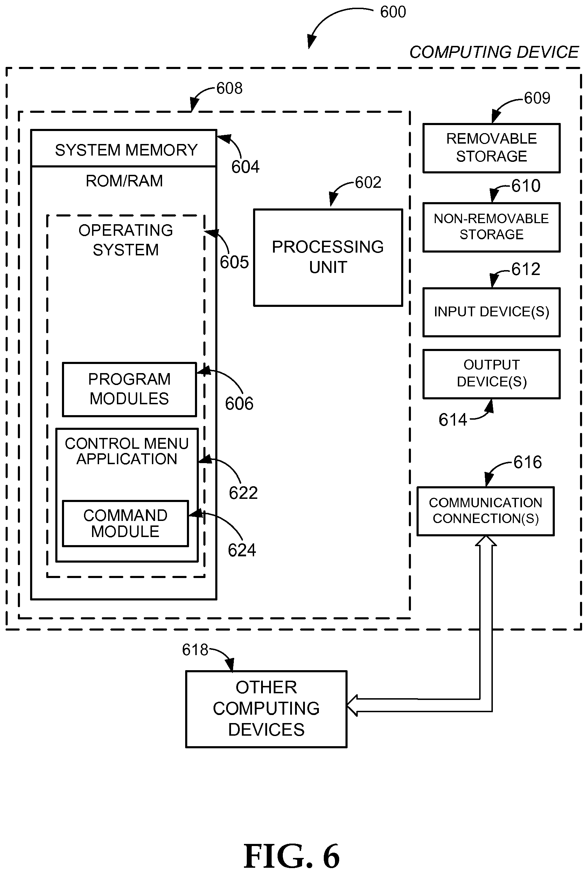

FIG. 6 and the associated discussion are intended to provide a brief, general description of a suitable computing environment in which embodiments may be implemented. With reference to FIG. 6, a block diagram of an example computing operating environment for an application according to embodiments is illustrated, such as computing device 600. In a basic configuration, computing device 600 may be any computing device executing an application with a touch based input mechanism for detecting user input according to embodiments and include at least one processing unit 602 and system memory 604. Computing device 600 may also include a plurality of processing units that cooperate in executing programs. Depending on the exact configuration and type of computing device, the system memory 604 may be volatile (such as RAM), non-volatile (such as ROM, flash memory, etc.) or some combination of the two. System memory 604 typically includes an operating system 605 suitable for controlling the operation of the platform, such as the WINDOWS ® operating systems from MICROSOFT CORPORATION of Redmond, Washington. The system memory 604 may also include one or more software applications such as program modules 606, control menu application 622, and command module 624.

Control menu application 622 may enable a computing device 600 to continually detect user touch input from a touch interface to detect user selection of a portion of a document, provide a control menu displaying available commands, detect user selection of a command, and to execute commands associated with the user selection. Through command module 624, control menu application 622 may display a compact control menu associated with a selected portion of a document, and may detect user touch input to display the compact control menu in a collapsed state or an expanded state, and to execute commands associated with the selected content. The application may continuously detect user input and provide a compact control menu when a user creates a selection in a document, while minimizing user interface interference by disappearing from the screen view when a user has not selected a portion of a document for editing. Application 622 and configuration module 624 may be separate application or integrated modules of a hosted service. This basic configuration is illustrated in FIG. 6 by those components within dashed line 608.

Computing device 600 may have additional features or functionality. For example, the computing device 600 may also include additional data storage devices (removable and/or non-removable) such as, for example, magnetic disks, optical disks, or tape. Such additional storage is illustrated in FIG. 6 by removable storage 609 and non-removable storage 610. Computer readable storage media may include volatile and nonvolatile, removable and non-removable media implemented in any method or technology for storage of information, such as computer readable instructions, data structures, program modules, or other data. System memory 604, removable storage 609 and non-removable storage 610 are all examples of computer readable storage media. Computer readable storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and which can be accessed by computing device 600. Any such computer readable storage media may be part of computing device 600. Computing device 600 may also have input device(s) 612 such as keyboard, mouse, pen, voice input device, touch input device, and comparable input devices. Output device(s) 614 such as a display, speakers, printer, and other types of output devices may also be included. These devices are well known in the art and need not be discussed at length here.

Computing device 600 may also contain communication connections 616 that allow the device to communicate with other devices 618, such as over a wired or wireless network in a distributed computing environment, a satellite link, a cellular link, a short range network, and comparable mechanisms. Other devices 618 may include computer device(s) that execute communication applications, web servers, and comparable devices. Communication connection(s) 616 is one example of communication media. Communication media can include therein computer readable instructions, data structures, program modules, or other data. By way of example, and not limitation, communication media includes wired media such as a wired network or direct-wired connection, and wireless media such as acoustic, RF, infrared and other wireless media.

Example embodiments also include methods. These methods can be implemented in any number of ways, including the structures described in this document. One such way is by machine operations, of devices of the type described in this document.

Another optional way is for one or more of the individual operations of the methods to be performed in conjunction with one or more human operators performing some. These human operators need not be collocated with each other, but each can be only with a machine that performs a portion of the program.

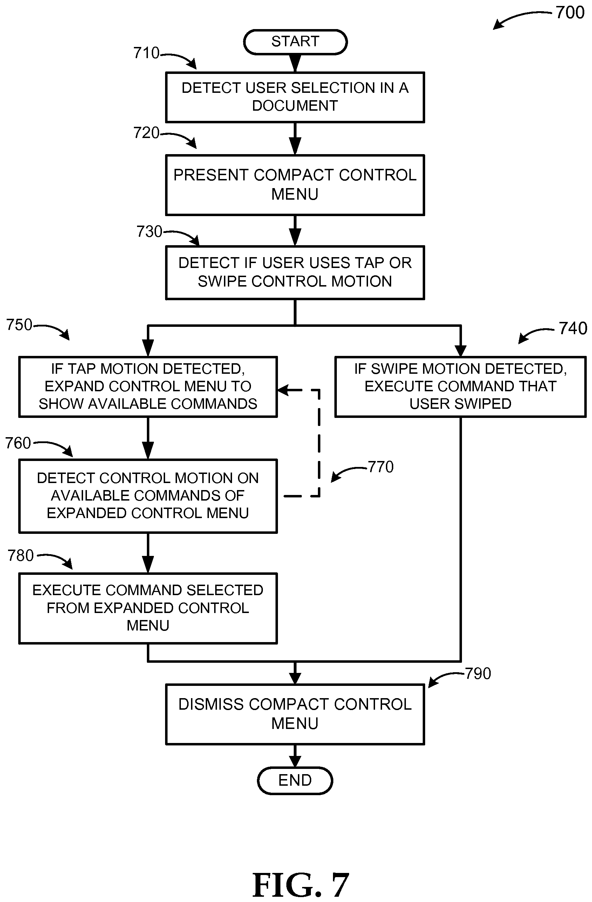

FIG. 7 illustrates a logic flow diagram for a process of providing a compact control menu over a touch interface for executing commands according to embodiments. Process 700 may be implemented on a computing device or similar electronic device capable of executing instructions through a processor.

Process 700 begins with operation 710, where user selection by touch in a document or application on a touch-enabled device is detected. At operation 720, the computing device presents a compact control menu associated with the selected portion of the document. The compact control menu may be initially presented in a collapsed state, such that defined regions of the compact control menu represent available commands associated with the selection are presented.

At operation 730 the computing device analyzes the touch motion and determines if the user uses a tap or swipe control motion. If a swipe motion is detected, then the device determines that the user intended to execute the command associated with the direction of the swipe. At operation 740, the device detects the swipe motion direction and executes the command associated with the defined region in the direction in which the user swiped. If a tap motion is detected, then at operation 750, the device operates to expand the compact control menu into an expanded state for displaying available commands. At operation 760, the device detects the control motion on the available commands of the expanded state control menu. If a tap is detected on an executable command, then at operation 780, the device operates to execute the command selected by the user tap motion from the expanded control menu. If a tap is detected on a command which may have more options associated with the command, then at operation 770, the process returns to operation 750 to detect the tap motion on an available command and further expand the control menu to display more available command options. When a tap is detected on an executable command, then at operation 780 the device executes the command and at operation 790 the compact control menu is dismissed and disappears from the screen view of the touch interface. According to some embodiments, a size and a number of operation commands displayed in an expanded state of the control menu may be determined based on a size of displayed user interface.

The operations included in process 700 are for illustration purposes. User touch input detection and providing a compact control menu may be implemented by similar processes with fewer or additional steps, as well as in different order of operations using the principles described herein.

The above specification, examples and data provide a complete description of the manufacture and use of the composition of the embodiments. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and embodiments.

## Claims

1. A method (700) for providing a control menu over a touch interface comprising:
detecting (710) a user touch selection of a portion (108) of a document;
displaying (720) a control menu in a collapsed state (110) with available commands associated with the selection;
detecting (730) a touch control motion associated with the control menu;
determining (730) if the touch control motion associated with the control menu is one of a tap motion or a swipe motion;
if the touch control motion associated with the control menu is a tap motion on the collapsed state control menu, expanding (750) the control menu from the collapsed state to an expanded state (210) displaying the available commands; and
if the touch control motion associated with the control menu is a swipe motion,
executing (740) a command associated with the direction of the detected touch control motion; and
removing (790) the control menu from display.

2. The method of claim 1, wherein displaying the collapsed state of the control menu includes presenting the menu with two or more defined regions (114) around a center region with at least one defined region representing one or more of the available commands.

3. The method of claim 1, wherein displaying the expanded state of the control menu includes presenting the menu with two or more defined regions (214) around a center region with at least one defined region representing one or more of the available commands (206, 208) and the commands are displayed at the defined regions.

4. A computing device (104, 600) with a touch-enabled input, the computing device comprising:
a touch interface component (612); and
a control component (608) configured to:
detect (710) a touch selection of a portion (108) of a document;
display (720) a control menu (110) including available commands associated with the selection, wherein the control menu is initially presented in a collapsed state;
detect (730) a touch control motion associated with the control menu;
determine (730) if the touch control motion is one of a swipe motion or a tapping motion;
expand (750) the control menu from the collapsed state to an expanded state (210) displaying the available commands if the touch control motion is a tapping motion on the collapsed state control menu; or
execute (740) a command associated with the detected direction of the touch control motion if the touch control motion is a swipe motion; and
remove (790) the control menu from display.

5. The computing device of claim 4, wherein the control menu initially presented in a collapsed state includes two or more defined regions (114) around a center region, and wherein at least one defined region represents one or more of the available commands.

6. A computer-readable storage medium with instructions stored thereon that perform the method of claim 1.

7. The computer-readable medium of claim 6, wherein the instructions further comprise:
if an available command associated with a defined region of the control menu in the expanded state of the control menu includes two or more additional options for further available commands, then upon detection (760, 770) of a further tapping motion by the user on the available command associated with said defined region, further expanding (750) the control menu to display the additional options.

## Patentansprüche

1. Verfahren (700) zum Bereitstellen eines Steuerungsmenüs über eine Berührungsschnittstelle, umfassend:
Ermitteln (710) einer Benutzerberührungsauswahl eines Abschnitts (108) eines Dokuments;
Anzeigen (720) eines Steuerungsmenüs in einem reduzierten Zustand (110) mit verfügbaren Befehlen im Zusammenhang mit der Auswahl;
Ermitteln (730) einer Berührungssteuerungsbewegung im Zusammenhang mit dem Steuerungsmenü;
Bestimmen (730), ob die Berührungssteuerungsbewegung im Zusammenhang mit dem Steuerungsmenü eine aus einer Tippbewegung oder einer Wischbewegung ist;
wenn die Berührungssteuerungsbewegung im Zusammenhang mit dem Steuerungsmenü eine Tippbewegung auf das Steuerungsmenü im reduzierten Zustand ist, Erweitern (750) des Steuerungsmenüs aus dem reduzierten Zustand in einen erweiterten Zustand (210) zum Anzeigen der verfügbaren Befehle; und
wenn die Berührungssteuerungsbewegung im Zusammenhang mit dem Steuerungsmenü eine Wischbewegung ist, Ausführen (740) eines Befehls, der der Richtung der ermittelten Berührungssteuerungsbewegung zugeordnet ist; und
Entfernen (790) des Steuerungsmenüs von der Anzeige.

2. Verfahren nach Anspruch 1, wobei das Anzeigen des reduzierten Zustands des Steuerungsmenüs das Präsentieren des Menüs mit zwei oder mehr definierten Regionen (114) rund um eine mittlere Region beinhaltet, wobei mindestens eine definierte Region einen oder mehrere der verfügbaren Befehle repräsentiert.

3. Verfahren nach Anspruch 1, wobei das Anzeigen des erweiterten Zustands des Steuerungsmenüs das Präsentieren des Menüs mit zwei oder mehr definierten Regionen (214) rund um eine mittlere Region beinhaltet, wobei mindestens eine definierte Region einen oder mehrere der verfügbaren Befehle (206, 208) definiert, und die Befehle in den definierten Regionen angezeigt werden.

4. Computervorrichtung (104, 600) mit einer berührungsaktivierten Eingabe, wobei die Computervorrichtung umfasst:
eine Berührungsschnittstellenkomponente (612); und
eine Steuerungskomponente (608), die zu Folgendem konfiguriert ist:
Ermitteln (710) einer Berührungsauswahl eines Abschnitts (108) eines Dokuments;
Anzeigen (720) eines Steuerungsmenüs (110), das verfügbare Befehle enthält, die der Auswahl zugeordnet sind, wobei das Steuerungsmenü zu Beginn in einem reduzierten Zustand präsentiert wird;
Ermitteln (730) einer Berührungssteuerungsbewegung im Zusammenhang mit dem Steuerungsmenü;
Bestimmen (730), ob die Berührungssteuerungsbewegung eine aus einer Wischbewegung oder einer Tippbewegung ist;
Erweitern (750) des Steuerungsmenüs aus dem reduzierten Zustand in einen erweiterten Zustand (210) zum Anzeigen der verfügbaren Befehle, wenn die Berührungssteuerungsbewegung eine Tippbewegung auf das Steuerungsmenü im reduzierten Zustand ist; oder
Ausführen (740) eines Befehls im Zusammenhang mit der ermittelten Richtung der Berührungssteuerungsbewegung, wenn die Berührungssteuerungsbewegung eine Wischbewegung ist; und
Entfernen (790) des Steuerungsmenüs von der Anzeige.

5. Computervorrichtung nach Anspruch 4, wobei das Steuerungsmenü, das zu Beginn in einem reduzierten Zustand präsentiert wird, zwei oder mehr definierte Regionen (114) um eine mittlere Region herum beinhaltet, und wobei mindestens eine definierte Region einen oder mehrere verfügbare Befehle repräsentiert.

6. Computerlesbares Medium, auf dem Befehle gespeichert sind, welche das Verfahren nach Anspruch 1 durchführen.

7. Computerlesbares Medium nach Anspruch 6, wobei die Befehle des Weiteren umfassen:
wenn ein verfügbarer Befehl im Zusammenhang mit einer definierten Region des Steuerungsmenüs im erweiterten Zustand des Steuerungsmenüs zwei oder mehr zusätzliche Optionen für weitere verfügbare Befehle enthält, dann
bei Ermittlung (760, 770) einer weiteren Tippbewegung durch den Benutzer auf den verfügbaren Befehl im Zusammenhang mit der definierten Region, weiteres Erweitern (750) des Steuerungsmenüs zum Anzeigen der zusätzlichen Optionen.

## Revendications

1. Procédé (700) pour fournir un menu de commande sur une interface tactile comprenant de :
détecter (710) une sélection tactile par utilisateur d'une partie (108) d'un document ;
afficher (720) un menu de commande dans un état replié (110) avec des instructions disponibles associées à la sélection ;
détecter (730) un mouvement de commande tactile associé au menu de commande ;
déterminer (730) si le mouvement de commande tactile associé au menu de commande est l'un parmi un mouvement de tapotement ou un mouvement de balayage ;
si le mouvement de commande tactile associé au menu de commande est un mouvement de tapotement sur le menu de commande en état replié, déployer (750) le menu de commande de l'état replié en un état déployé (210) affichant les instructions disponibles ; et
si le mouvement de commande tactile associé au menu de commande est un mouvement de balayage, exécuter (740) une instruction associée à la direction du mouvement de commande tactile détecté ; et
retirer (790) le menu de commande de l'affichage.

2. Procédé selon la revendication 1, dans lequel l'affichage de l'état replié du menu de commande comprend la présentation du menu à l'aide de deux ou plus de deux régions définies (114) autour d'une région centrale, au moins une région définie représentant une ou plusieurs des instructions disponibles.

3. Procédé selon la revendication 1, dans lequel l'affichage de l'état déployé du menu de commande comprend la présentation du menu à l'aide de deux ou plus de deux régions définies (214) autour d'une région centrale, au moins une région définie représentant une ou plusieurs des instructions disponibles (206, 208) et les instructions sont affichées au niveau des régions définies.

4. Dispositif informatique (104, 600) ayant une entrée tactile, le dispositif informatique comprenant :
un composant d'interface tactile (612) ; et
un composant de commande (608) configuré pour :
détecter (710) une sélection tactile d'une partie (108) d'un document ;
afficher (720) un menu de commande (110) comprenant des instructions disponibles associées à la sélection, dans lequel le menu de commande est initialement présenté dans un état replié ;
détecter (730) un mouvement de commande tactile associé au menu de commande ;
déterminer (730) si le mouvement de commande tactile est l'un parmi un mouvement de balayage ou un mouvement de tapotement ;
déployer (750) le menu de commande de l'état replié à un état déployé (210) affichant les instructions disponibles si le mouvement de commande tactile est un mouvement de tapotement sur le menu de commande en état replié ; ou
exécuter (740) une instruction associée à la direction détectée du mouvement de commande tactile si le mouvement de commande tactile est un mouvement de balayage ; et
retirer (790) le menu de commande de l'affichage.

5. Dispositif informatique selon la revendication 4, dans lequel le menu de commande initialement présenté dans un état replié comprend deux ou plus de deux régions définies (114) ou plus autour d'une région centrale, et dans lequel au moins une région définie représente une ou plusieurs des instructions disponibles.

6. Support de stockage lisible par ordinateur ayant des instructions stockées sur celui-ci qui effectuent le procédé selon la revendication 1.

7. Support lisible par ordinateur selon la revendication 6, dans lequel les instructions comprennent en outre :
si une instruction disponible associée à une région définie du menu de commande dans l'état déployé du menu de commande inclut deux ou plus de deux options supplémentaires pour d'autres instructions disponibles, alors, lors de la détection (760, 770) d'un autre mouvement de tapotement par l'utilisateur sur l'instruction disponible associée à ladite région définie, le déploiement supplémentaire (750) du menu de commande pour afficher les options supplémentaires.
